Europäisches Patentamt

(19) European Patent Office

Office européen des brevets

(11) Publication number: **0 041 279**

**A1**

(12) # EUROPEAN PATENT APPLICATION

(21) Application number: **81200438.0**

(22) Date of filing: **16.04.81**

(51) Int. Cl.³: **G 01 F 13/00**
**F 23 N 1/00, G 05 D 7/03**
**B 65 G 53/66, B 65 G 53/48**

(30) Priority: **23.04.80 NL 8002363**

(43) Date of publication of application:
**09.12.81 Bulletin 81/49**

(84) Designated Contracting States:
**AT BE CH DE FR GB IT LI LU NL SE**

(71) Applicant: **Niemeijer, Willem**
**Onnesstraat 117**
**NL-3331 EL Zwijndrecht(NL)**

(72) Inventor: **Niemeijer, Willem**
**Onnesstraat 117**
**NL-3331 EL Zwijndrecht(NL)**

(74) Representative: **van der Beek, George Frans et al,**
**Nederlandsch Octrooibureau Johan de Wittlaan 15 P.O.**
**Box 29720**
**NL-2502 LS Den Haag(NL)**

(54) **A metering device for powdery material, in particular powdery fuel.**

(57) A metering device for powdery material, in particular powdery fuel, said device being provided with a chute trap (4) at the end of a feed pipe (3) into which the feed hopper (1) for the powdery material debouches, said chute trap (4) being movable in dependency on the powder pressure at the bottom of said feed hopper.

fig-1

1

A metering device for powdery material, in particular powdery fuel.

The invention relates to a metering device for powdery material, in particular powdery fuel.

When supplying fluidized powdery fuel to a burner there will be the problem that the powdery material exhibits properties of a fluid so that a larger amount stored in the bunker will lead to a higher pressure and consequently to an excess dosage. Stated differently a varying weight of powdery material in the bunker will lead to a varying supply of powdery material to the burner. It is known to avoid such deviation of the control due to the weight of the material in store in the bunker by installing a relatively small supply vessel resting on weighing means below said bunker which weighing means operate a supply sluice mounted between the bunker and said relatively small supply vessel in such a manner that the supply vessel will always be filled to about the same level. A drawback of such a design is the increase of the building height of the installation which height has a highly cost encreasing effect.

The object of the invention is to avoid such drawback and to provide a metering device of the above type in which the metering control disturbing influence of the weight of the powdery material in store in the bunker is balanced in a simple and reliable way by compensation.

To that effect the metering device for powdery material according to the invention is provided with a chute trap at the end of a feed pipe into which the feed hopper for the powdery material debouches, said chute trap being movable in dependency on the powder pressure at the bottom part of said feed hopper.

In order to cause the compensating counter pressure at the end of the feed pipe to correspond essentially to the pressure at the bottom part of the bunker there may be provided a pressure feeler membrane responsive to the powder pressure at the bottom part of the feed hopper, while between said membrane and said chute trap there is provided a transmission causing the chute trap to exert a pressure on the powdery material at the end of the feed pipe essentially corresponding to the powder pressure determined by the pressure feeler mem-

2

brane.

In a sturdy hardly vulnerable embodiment the chute trap will be operated by an air cylinder which is in communication with a counter pressure chamber provided with a compensator membrane for compensating the displacement of the pressure feeler membrane, the pressure in said counter pressure chamber being controlled in dependency on the displacement of the pressure feeler membrane.

For regulating the pressure in the counter pressure chamber the pressure feeler membrane and the compensator membrane are connected to each other by means of a rod on which an actuating means has been mounted by which means a switch controlling the pressure in the counter pressure chamber is actuated.

Preferably the actuating means possesses a face at an oblique angle with respect to the direction of displacement thereof along which face a roller of the switch may run.

A proper compensation of the pressure is obtained if the pressure in the counter pressure chamber is kept at a value, expressed in atmospheres, that is essentially equivalent with the ratio of the free surface areas of the pressure feeler membrane and the compensator membrane as well as the ratio of the surface areas of the chute trap and of the piston of said air cylinder.

For safeguarding the membranes there are provided adjustable safety stops for restricting the displacement of both said membranes in two directions.

Preferably the chute trap is of conical shape.

For an efficient and controllable conveyance of the powdery material there is provided within the feed pipe a driven conveyor worm mounted in rotatable bearings.

The discharge of the metered powdery material may take place rapidly and easily if the feed pipe debouches into an airing chamber which on its turn is in communication with a discharge line.

The invention will now be elucidated in further detail with reference to the drawings in which by way of example an embodiment has been despicted.

Fig. 1 shows a side elevation of the device partly in longitudinal cross section.

Fig. 2 shows a cross section of the compensating mechanism used

3

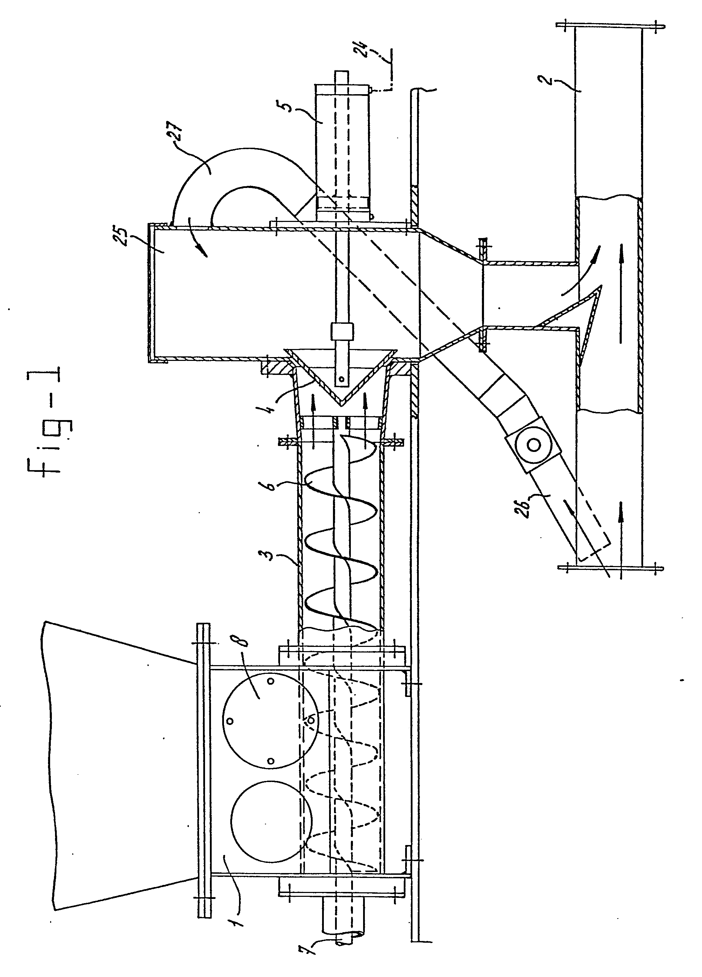

in the device of Fig. 1.

The metering device represented in Fig. 1 is connected to the bottom part of a feed hopper 1 extending from a bunker for powdery fuel. The metering device serves to supply the powdery material in a metered amount to a burner by way of a discharge line 2 and to eliminate thereby the control disturbing influence of the weight of the powdery material stored in the bunker. The metering device includes a feed pipe 3 having at the end thereof a conical shaped chute trap 4 operated by an air cylinder 5 the air supply of which is controlled in dependency on the powder pressure at the bottom part of the hopper 1. Within the pipe 3 there is provided a driven conveyor worm 6. The bearings and drive thereof have not been represented.

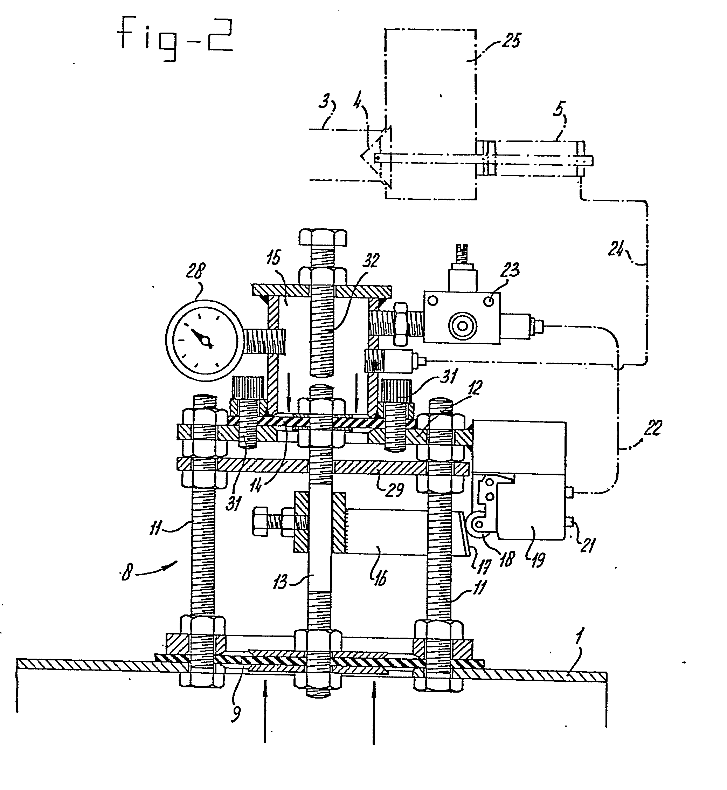

In a side wall of the bottom part of the feed hopper 1 there are provided next to each other an airing device 7 to be discussed below and a compensating device 8 represented in detail in Fig. 2.

The compensating device 8 comprises a pressure feeler membrane 9 mounted in a side wall of the feed hopper 1 which membrane is connected to a supporting plate 12 by means of four bolts 11 and is furthermore connected to a compensator membrane 14 by means of a rod 13. For the fastening of the bolts 11 and the rod 13 to the membranes and the supporting plate nuts and intermediate rings are used in a way known per se like represented in the drawing though not provided with reference numerals.

The compensator membrane 14 constitutes one of the limiting walls of the counter pressure chamber 15 in which a pressure may be built up by means of which the combination of compensator membrane 14 and pressure feeler membrane 9 may be pushed back against the powder pressure.

On the connecting rod 13 between the two membranes 9 and 14 there is mounted an actuating means 16 provided with a face ramp 17. On this face ramp there runs a roller 18 of a switch 19. This switch is fed with a pressurized air at a pressure of for instance 6 atmospheres through a connecting pipe 21. Between the switch 19 and the counter pressure chamber 15 there is provided a line 22 transferring the air pressure from the switch 19 to the chamber 15 via a throttle valve 23. The value of the presssure in the line 22 is

4

determined by the position of the roller 18. At a higher powder powder pressure the pressure feeler membrane 9 will be pushed outwardly whereby the roller 18 along the face ramp 17 will be pushed into the switch this being conducive to an increase of the pressure in the line 22 and consequently in the counter pressure chamber 15. The compensator membrane is subject to this increased pressure in the chamber 15 and pushes the pressure feeler membrane 9 inwardly again by means of the rod 13.

The increased pressure in the counter pressure chamber is transferred to the air cylinder 5 via the line 24, said air cylinder causing the conical trap member 4 to exert a higher counter pressure on the powdery material at the end of the pipe 3. The counter pressure exerted on the powdery material by the trap 4 should be essentially equivalent to the pressure exerted by the powdery material stored in the bunker at the beginning of the conveyor worm 6.

In a certain examplary embodiment the pressure in the counter pressure chamber will be four atmospheres , when the pressure feeler membrane is not loaded while the ratio of the free surface areas of a pressure feeler membrane 9 and a compensator membrane 14 amounts to four. This means that the membranes 9 and 14 are in the equilibrium position. The ratio of the surface areas of the trap 4 and the piston of the air cylinder 5 also amounts to four. Consequently the pressure exerted on the trap 4 causes a counter pressure on the powdery material that is four times smaller than the pressure in the cylinder 4 and in the counter pressure chamber 15 which pressure equals the powder pressure on the membrane 9. Downstream of the trap 4 the pipe 3 debouches into an additional airing chamber 25 to which air is supplied via a branch connection 26 of the line 2 and a flexible tube 27 by means of which the metered amount of powdery material is blown into the line 2. At the location of the arrow air is supplied to the line 2 for conveying the powdery fuel to the burner.

In order to allow a determination of the pressure in the counter pressure chamber 15 a pressure gauge 28 is connected to said chamber. For protecting the membranes 9 and 14 against damage by too large a deformation adjustable stops 31, 32 are provided which cooperate with a plate 29 and with the end of the connecting rod 13, respectively.

The metering device described is a simple, reliable, hardly vul-

5

nerable means for compensating the varying pressure at the entrance of the conveyor worm 6, namely in that this varying pressure is determined and that by means of the compensation device 8, the air cylinder 5 and the trap 4 it is assured that the counter pressure at the discharge end of the worm 6 equals the pressure at the entrance of the worm 6.

Within the scope of the claims several modifications and alterations of the device described are possible.

6

## C L A I M S.

1. A metering device for powdery material, in particular powdery fuel, said device being provided with a chute trap (4) at the end of a feed pipe (3) into which the feed hopper (1) for the powdery material debouches, said chute trap (4) being movable in dependency on the powder pressure at the bottom part of said feed hopper.

2. The metering device according to claim 1 <u>characterized in that</u> at the bottom part of the feed hopper there is provided a pressure feeler membrane (9) responsive to the powder pressure and that between said membrane (9) and said chute trap (4) there is provided a transmission causing the chute trap to exert a pressure on the powdery material at the end of the feed pipe (3) essentially corresponding to the powder pressure detrmined by the pressure feeler membrane (9).

3. The metering device according to claim 1 or 2 <u>characterized in that</u> the chute trap (4) is operated by an air cylinder (5) which is in communication with a counter pressure chamber (15) provided with a compensator membrane (14) for compensating the displacement of the pressure feeler membrane (9), the pressure in said counter pressure chamber (15) being adjusted in dependency on the displacement of the pressure feeler membrane (9).

4. The metering device according to anyone of the preceding claims <u>characterized in that</u> the pressure feeler membrane (9) and the compensator membrane (14) are connected to each other by means of a rod (13) on which an actuating means (16) has been mounted by which means a switch (19) controlling the pressure in the counter pressure chamber (15) is actuated.

5. The metering device according to claim 4 <u>characterized in that</u> the actuating means (16) possesses a face (17) at an oblique angle with respect to the direction of displacement thereof, along which face a roller (18) of the switch (19) may run.

6. The metering device according to anyone of claims 3 to 5, inclusive <u>characterized in that</u> the pressure in the counter pressure chamber (15) is kept at a value expressed in atmospheres, that is essentially equivalent with the ratio of the free surface areas of the pressure feeler membrane (9) and the compensator membrane (15) as well as the ratio of the surface areas of the chute trap (4) and of the piston of the air cylinder (5).

7. The metering device according to anyone of claims 3 to 6, inclusive, characterized in that there are provided adjustable safety stops (31,32) for restricting the displacement of both said membranes in two directions.

8. The metering device according to anyone of the preceding claims characterized in that the chute trap (4) is of a conical shape.

9. The metering device according to anyone of the preceding claims characterized in that within the feed pipe (3) there is provided a driven conveyor worm (6) mounted in rotatable bearings.

10. The metering device according to anyone of the preceding claims characterized in that the feed pipe (3) debouches into an airing chamber (25) which on its turn is in communication with a discharge line (2).

————————

Fig-1

Fig-2

European Patent Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |

US - A - 3 300 091 (WONDRAK) — 1,2

* column 2, lines 64-72; column 3, lines 1-14; figures 1,4 *

---

NL - A - 68 00 678 (FULLER) — 1,3,4

* page 1, lines 6-11; page 9, lines 25-36; page 10, lines 1-5; page 5, lines 25-36; page 6, lines 1-36; figure 1 *

& GB - A - 1 206 610

---

DE - C - 1 642 958 (WAELSCHE MASCH. FABR. GmbH) — 1-3,8-10

* column 1, lines 1-23; column 2, line 59 - column 3, line 21; figures *

---

DE - C - 892 247 (L. WAGENSEIL) — 1-2

* figures 1-2; page 1, lines 13-17 *

---

US - A - 2 649 714 (A.S. GRIFFITH Jr.) — 3-4,7

* figure 1; column 2, lines 9-38; column 3, line 22 - column 4, line 42 *

---

FR - A - 2 135 997 (THORDARSON) — 3,4,7

* figures 1,2,4; page 6, lines 21-29; page 7, lines 4-30 *

---

US - A - 3 486 664 (B.A. LOOMANS) — 1,2
./.

**CLASSIFICATION OF THE APPLICATION (Int. Cl.³)**

```
G 01 F  13/00
F 23 N   1/00
G 05 D   7/03
B 65 G  53/66
        53/48
```

**TECHNICAL FIELDS SEARCHED (Int. Cl.³)**

```
B 65 G  53/08
        53/66
        53/48
G 01 F  13/00
        23/16
        15/02
B 65 G  65/40
        65/46
F 23 N   1/00
G 05 D   7/03
```

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 03-09-1981 | NUYTEN |

**0041279**

European Patent
Office

**EUROPEAN SEARCH REPORT**

Application number

EP 81 20 0438 -2-

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | * figure 1; column 2, lines 33-47; column 2, lines 61-64 * <br><br> --------- | | |

TECHNICAL FIELDS SEARCHED (Int. Cl³)